# EUROPEAN PATENT SPECIFICATION

(11) **EP 4 519 926 B1**
(45) Date of publication and mention of the grant of the patent: **11.03.2026**
(21) Application number: 24729908.4
(22) Date of filing: 23.05.2024
(51) Int. Cl.: H01M 8/1018, C25B 1/02, C25B 11/081, C25B 11/091, H01M 4/92, H01M 4/90, B01J 23/46, H01M 8/10

(54) **OXYGEN EVOLUTION REACTION CATALYST AND METHOD FOR ITS PREPARATION**
SAUERSTOFFREDUKTIONSREAKTION-KATALYSATOR UND VERFAHREN ZU SEINER HERSTELLUNG
CATALYSEUR POUR RÉACTION D'ÉVOLUTION DE L'OXYGÈNE ET SON PROCÉDÉ DE PRÉPARATION

(30) Priority: 24.05.2023 US 202363503974 P; 26.07.2023 EP 23187789; 18.09.2023 EP 23197878
(43) Date of publication of application: 12.03.2025
(73) Proprietor: Johnson Matthey Public Limited Company, London EC2V 7AD (GB)
(72) Inventor: PRITCHARD, Antony, Royston Hertfordshire SG8 5HE (GB); SANTORO, Amedeo, Royston Hertfordshire SG8 5HE (GB); SMART, Katharine, Royston Hertfordshire SG8 5HE (GB); WARR, Antony, Royston Hertfordshire SG8 5HE (GB); ZSCHIEGNER, Stephen, Neptune City, New Jersey 07753 (US)
(74) Representative: Johnson Matthey Plc
(86) International application number: PCT/GB2024/051329
(87) International publication number: WO 2024/241056

(56) References cited:
- WO-A1-2022/138309
- WO-A1-2023/047103
- WO-A1-2023/113411
- FELIX C. ET AL: "Synthesis and Optimisation of IrO2 Electrocatalysts by Adams Fusion Method for Solid Polymer Electrolyte Electrolysers", MICRO AND NANOSYSTEMS, vol. 4, no. 3, 1 August 2012 (2012-08-01), NL, pages 186 - 191, XP055931122, ISSN: 1876-4029, DOI: 10.2174/1876402911204030186

## Description

### Technical field

The present invention relates to iridium-containing oxygen evolution reaction (OER) catalysts and a method for their preparation.

### Background art

Oxygen evolution reaction (OER) catalysts are an important component of fuel cells and water electrolysers. The OER reaction in acidic conditions is approximated by the following equation:

2H₂O → O₂ + 4H⁺ + 4e⁻

Iridium oxide catalysts are widely used for this reaction. Despite being widely referred to as "iridium oxide", most "iridium oxide" catalysts are more likely a mixture of oxidic iridium species such as IrO₂, Ir₂O₃ and/or IrO(OH)₂. For that reason "iridium oxide" is often referred to as IrOx.

OER catalysts used in a fuel cell or water electrolyser should ideally have a good activity per gram of iridium and should also have high stability under operation conditions of the fuel cell or water electrolyser. IrOx catalysts can be prepared in various degrees of crystallinity ranging from essentially amorphous to highly crystalline.

The article "Synthesis and Optimisation of IrO2 Electrocatalysts by Adams Fusion Method for Solid Polymer Electrolyte Electrolysers" Micro and Nanosystems 2012, 4, 186-191 describes the preparation of iridium dioxide using the Adams fusion method. The Adams fusion method involves the fusion of a metal chloride precursor with sodium nitrate in air at elevated temperature and has been used to prepare various noble metal oxides. In this paper H₂IrClₑ and NaNO₃ were combined in isopropanol, the isopropanol is removed by heating in an oven and the resulting catalyst precursor/salt mixture was then reacted in a preheated furnace. The obtained metal oxide was then cooled, washed with ultrapure water to remove excess NaNO₃ and then dried in an oven at 100 °C. Amorphous iridium oxide was obtained in all cases. A peak assigned to the (101) reflection of IrO₂ at 2θ ~ 34-35° was seen in all samples.

The article "Iridium Oxide for the Oxygen Evolution Reaction: Correlation between Particle Size, Morphology, and the Surface Hydroxo Layer from Operando XAS" Chem. Mater. 2016, 28, 6591-6604 describes the preparation of iridium oxide by an Adams fusion method. The method uses Ir(acac)₃ as a raw material and by the use of a chloride-free synthesis chloride contamination of the product is avoided.

The article "Assessing the Potential of Co-Pt Bronze for Electrocatalysis in Acidic Media" Catalysis 2018, 8, 258 describes comparative testing of Co-Pt bronzes against a relatively crystalline iridium oxide and a relatively amorphous iridium oxide, the latter being sold as product number 43396 under the brand Premion^{®} by Alfa Aesar.

WO2017/149130A1 describes a catalytically active material for the electrochemical oxidation of water which comprises an amorphous Ir-oxohydroxide with a S_{BET} of ≥ 50 m²/g. A method is also described for producing the material, involving the steps of microwave-assisted thermal treatment of a basic solution of an Ir(III) or Ir(IV) complex, where the basic solution comprises hydroxide ions in a ratio satisfying 50 : 1 > hydroxide : Ir (mol/mol) ≥ 1 : 100.

WO2018/224771A1 describes a material comprising iridium and/or iridium oxide (IrO₂), the material is microporous and is in the form of micron or sub-micron spheres. It is preferred that the material is amorphous. A method is also described for producing the material, involving the steps of (i) preparing an aqueous solution or suspension comprising at least one iridium precursor and at least one porogen or pore-forming agent chosen from organic polymers and copolymers and one of their mixtures; (ii) atomizing the aqueous solution or suspension from step (i) to form solid composite beads; and (iii) calcining the solid composite beads.

WO2022/102580A1 describes an iridium oxide material in which the peak intensity ratio of the (110) peak / (101) peak is 0.65 or less. The (110) peak is at 2θ = 28° ± 1° and the (101) peak is at 2θ = 35° ± 1°. A method is also described for preparing the material, which involves preparing a suspension of iridium nanoparticles or a solution of an iridium compound, and treating the resulting suspension or solution with high-temperature and high-pressure water.

WO2022/138309A1 describes an iridium-containing oxide having a total pore volume of 0.20 cm³/g or more (calculated by a BJH method from nitrogen adsorption/desorption isotherm measurement), and a pore distribution having an average pore diameter of 7.0 nm or more. A method for manufacturing the material is also described, which involves the combination of a dispersion of iridium nanoparticles or iridium hydroxide particles with water at a temperature of 100 °C or more and 0.1 MPa or more.

WO2023/095858A1 describes an oxygen evolution reaction catalyst containing an oxide containing yttrium and iridium and having a BET specific surface area of 50 m²/g or more. A method for manufacturing the material is also described, which involves the combination of a dispersion of yttrium nanoparticles and iridium nanoparticles, or a solution of an yttrium compound and an iridium compound, with water at a temperature of 100 °C or more and 0.1 MPa or more.

WO2023/047103A1 describes an OER catalyst comprising a mixture of IrO₂ and Li₃IrO4 phases, having reflections in its XRD pattern at 2θ = 18° and 43° for Li₃IrO₄ and at 2θ = 28° and 54° for IrO₂, and having a N₂-BET surface area of ≥ 50 m²/g. Also described is a method for manufacturing the catalyst involving a precipitation reaction from a solution comprising an iridium salt and a lithium salt.

CN114369845A describes IrOx nanocluster composite material having a hollow nano-tubular structure. A method for manufacturing the material is also described, which involves hydrothermal reaction between chloriridic acid and barium chloride and ultrasonicating to obtain a powder, treating the powder with dilute nitric acid and washing to obtain IrOx@BaCO₃, then further processing to obtain the IrOx nanocluster composite material.

CN116005185A describes a composite catalyst of iridium and iridium oxide, in which the XRD spectrogram of the catalyst shows a characteristic peak of elemental iridium but no characteristic peak of iridium dioxide. A method for manufacturing the material is also described, which involves: (i) mixing an iridium source and a complexing agent in water to make a solution, the complexing agent being a polybasic acid or a soluble salt thereof; (ii) adjusting the pH value of the solution to 7-10; (iii) removing water to obtain a catalyst precursor; and (iv) calcining the catalyst precursor in an oxygen-containing atmosphere.

JP2020132465A described iridium oxide having a specific surface area of 150 m²/g or more. A method for manufacturing the material is also described, which involves: hydrolysing chloriridic acid or a salt thereof with aqueous ammonia and heat-drying in the presence of nitrate.

KR20220076414A describes an iridium oxide-based catalyst comprising rod-shaped crystalline iridium oxide and particulate amorphous iridium oxide formed on at least a portion of the rod-shaped crystalline iridium oxide. A method for manufacturing the material is also described, which involves: reacting an iridium precursor compound, a salt of an alkali or alkaline earth metal and a compound of Formula (I) (as defined in the reference); calcining the mixture to obtain rod-shaped crystalline iridium oxide; and mixing the rod-shaped crystalline iridium oxide with an iridium precursor compound and a polyhydric alcohol.

It is typically observed that amorphous or poorly crystalline iridium oxide materials are more active than crystalline iridium oxide, but this higher activity comes at the expense of operational stability. For reasons of operational stability it is preferred to have a low degree of iridium dissolution during operation. There is a need for alternative OER catalysts having a good balance between catalyst activity and operational stability, which can be manufactured by a route which is scalable. The route should ideally also avoid the use of expensive iridium salts which are used in many known syntheses of iridium OER catalysts.

### Summary of the invention

In a first aspect the invention provides a process for preparing an oxygen evolution reaction catalyst, comprising the steps of:
(i) combining iridium powder and a peroxide salt to produce a powder mixture;
(ii) carrying out thermal treatment on the powder mixture;
(iii) dissolving the product from (ii) in water to produce a solution;
(iv) reducing the pH of the solution from (iii) to affect a precipitation and form a solid and a supernatant;
(v) separating the solid from the supernatant; and
(vi) drying the solid.

A benefit of the process is that iridium powder is used as a raw material rather than iridium salts which are used in many previously described syntheses of OER catalysts. Iridium powder is generally less expensive than iridium salts. The avoidance of iridium salts, and particularly chloride salts, means that the product can be produced with very low chloride impurities. Chloride contamination in the product may affect the catalytic properties and performance due to the possibility of HCI and/or Cl₂ production during operation which can damage the equipment.

A further benefit of this process is that, by control of the fusion step (ii) and/or by carrying out a filtration between steps (iii) and (iv), it is possible to produce a product which is free from iridium metal. Iridium metal is believed to be less active or inactive in the OER, so material made by this process may be able to achieve comparable OER activity using lower loadings of total iridium. Iridium may also dissolve under typical conditions of CCM operation which is undesirable. Some sources of iridium metal have a geometry which can cause damage to the membrane, which is a further reason why complete conversion of the iridium metal is desirable.

A further benefit of the process is that, by appropriately selecting the material used to contain the powder mixture during step (ii), the resulting product can be made with very low contaminants of transition metals. Some transition metals, particularly copper, chromium and cobalt, are known to catalyse the formation of oxidizing species which can damage the membrane of a CCM (see the article "A comparative study of several transition metals in Fenton-like reaction systems at circum-neutral pH" Acta Chim. Slov. 2003, 50, 619-632) and the avoidance of these metals is particularly advantageous.

This process produces an OER catalyst which has a good balance between activity and operational stability. The catalyst produced following the drying step (vi) typically has a BET surface area of 10-50 m²/g and is pseudo-amorphous. As used herein the term "pseudo-amorphous" means that the material exhibits a single maxima in its XRD spectrum in the region 2θ = 25-38°. Despite being pseudo-amorphous the material has excellent operational stability showing only low levels of iridium dissolution. If a more crystalline catalyst is desired, the process may include a further step of calcining the material from step (vi).

The process may include a subsequent step of incorporating the catalyst into a catalyst-coated membrane. The process may also include a subsequent step of incorporating the catalyst-coated membrane into a fuel cell or water electrolyser.

In a second aspect the invention provides an iridium-based oxygen evolution reaction catalyst obtained or obtainable by a process according to the first aspect of the invention.

In a third aspect the invention provides an iridium-based oxygen evolution reaction catalyst, wherein:
the catalyst exhibits a single maxima in its XRD spectrum in the region 2θ = 25-38°;
the catalyst has a BET surface area of 10-50 m²/g;
the content of any individual transition metal, other than iridium, is 0-600 ppm when measured by inductively coupled plasma mass spectrometry (ICP-MS).

The OER catalyst according to the second and third aspects of the invention has particular utility in water electrolysis and fuel cell applications, for example as part of a catalyst coated membrane for a fuel cell or water electrolyser.

In a fourth aspect of the invention there is provided a catalyst coated membrane comprising an OER catalyst according to the second aspect.

In a fifth aspect of the invention there is provided a fuel cell or water electrolyser comprising a catalyst coated membrane according to the third aspect.

### Description of the Figures

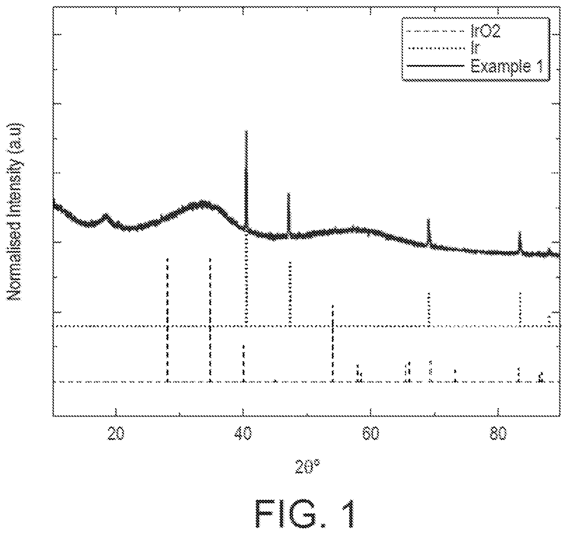

Figure 1 shows the X-ray diffraction (XRD) spectrum of the material from Example 1 compared with database values for iridium and iridium dioxide.

### Detailed description

Any sub-headings are for convenience only and are not intended to limit the invention.

### Raw materials and mixing - step (i)

The term "powder" used in connection with iridium powder is intended to encompass both spherical powders and also irregular powders such as iridium sponge. It is preferred that the iridium powder has a total impurity content of at most 1% (i.e. 99+% iridium), preferably a total impurity content of at most 0.5% (i.e. 99.5+% iridium), more preferably a total impurity content of at most 0.1% (i.e. 99.9+% iridium), in each case to minimise the content of impurities in the iridium oxide catalyst. For demanding applications which require particularly low impurity levels it is preferred that the iridium powder has a total impurity content of at most 0.05% (i.e. 99.95+% iridium).

The role of the peroxide salt is to oxidize the iridium powder. In preferred embodiments the peroxide salt is a Group I or Group II peroxide salt, preferably a Group I peroxide salt. Preferred salts are sodium peroxide and barium peroxide as these are commercially available. Sodium peroxide is particularly preferred. The peroxide salt may be in the form of beads or powder.

The molar ratio of Ir : peroxide salt should preferably be 1 : ≥ 3. At molar ratios of 1 : < 3 conversion was not sufficient. While there is no particular upper limit on the equivalents of peroxide salt, too large an excess of peroxide salt should be avoided on the grounds of process safety, cost, and to avoid contamination of the product with metal ions from the peroxide salt. It is preferred that the molar ratio of Ir : peroxide salt is 1 : 3 to 1 : 10, preferably 1 : 4 to 1 : 10, preferably of 1 : 6 to 1: 9.

It is preferred that in step (i) no other components are added besides the iridium powder and the peroxide salt.

### Fusion - step (ii)

In step (ii) a thermal treatment is carried out on the mixture of iridium and peroxide salt (hereafter "powder mixture"); this is referred to herein as the fusion step. The product of this step is believed to be a mixture of oxidic species, including iridium dioxide and metal iridates (M₂IrO₃ (M⁺) and MIrO₃ (M²⁺)).

The fusion between iridium powder and sodium peroxide itself is known and described in the article "Chemical Dissolution of Iridium Powder Using Alkali Fusion Followed by High-Temperature Leaching" Materials Transactions Vol. 52, No. 11 (2011) pp. 2067-2070. In this reference iridium powder and sodium peroxide are combined at a molar ratio of Ir : Na₂O₂ ranging from 1 : 0.8 to 1 : 2.0 using a planetary ball mill using zirconia balls. The milled material was transferred to a nickel crucible and heated in air in an electric furnace at a temperature of either 500 or 600 °C for either 4 or 24 h. Although this reference describes the fusion of iridium powder and sodium peroxide, and leaching of iridium from the resulting fused product, it does not describe the isolation of an OER catalyst.

A variety of different heating techniques may be used for the fusion step.

In one method the fusion step is carried out in a static oven or static furnace. In this technique the power mixture is held within a container (e.g. a tray) within the oven or furnace.

In an alternative method the fusion step is carried out using a belt oven or belt furnace. In this technique the powder mixture is held within a container (e.g. a tray) and is passed through the oven or furnace by means of a belt. The oven or furnace may be designed for single or multizone operation. Such ovens and furnaces are available commercially.

Static ovens and belt ovens typically generate heat that is transferred to the powder mixture. Static ovens and belt ovens typically include a fan to aid in even distribution of heat throughout the oven.

Static furnaces and belt furnaces may achieve heating through any suitable means known to those skilled in the part. Preferred heating methods include: combustion heating, electrical heating, electric arc heating, induction heating, microwave heating or infrared heating.

In an alternative method the fusion step is carried out using a rotary calciner. A rotary calciner typically comprises a rotating drum which is externally heated. The use of rotary calcination is preferred over the use of a static oven, static furnace, belt oven or belt furnace because rotary calcination mixes the powder which helps to ensure a uniform distribution of heat, which is thought to be beneficial for achieving high conversion of the iridium and more consistent product quality. If the process is operated continuously then the drum may be inclined to control the residence time of the powder within the drum. The use of rotary calcination also offers a health and safety benefit because the operator is shielded from the reactant mixture more thoroughly than other techniques. Rotary calciners are available commercially.

In an alternative method the fusion step is carried out in a fluid bed calciner. In a fluid bed calciner a gas is passed through the powder mixture such that the powder mixture exhibits fluid-like properties.

In an alternative method the fusion step is carried out using a hot plate with the powder mixture held within a suitable container on the hot plate.

In an alternative method the fusion step is carried out using a combustion flame (e.g. a Bunsen burner) with the powder mixture held within a suitable container.

The applicant has found that under the oxidizing conditions of step (ii) it is possible for the metals at the surface of the equipment used to contain the powder mixture to contaminate the product. The presence of certain transition metals in the OER catalyst should ideally be avoided because they may catalyse the formation of OH and O₂H radicals which can in turn cause defects in the CCM and reduce the lifetime of the CCM. Contamination of the product can be avoided by appropriate selection of the material used to contain the powder mixture. By "used to contain the powder mixture" we mean the surface of any equipment which comes into contact with the powder mixture during the fusion step. For instance, in the case of a static oven, static furnace or belt furnace, contamination of the product can be avoided by using a tray in which at least the surface of the tray which contacts the powder mixture is made of a suitably selected material. In the case of a rotary calciner the inner surface of the drum is made of a suitably selected material.

In one preferred embodiment the material used to contain the powder mixture is a metal oxide. A preferred material is aluminium oxide.

In one preferred embodiment the material used to contain the powder mixture is a stainless steel. A preferred stainless steel is a chromium-nickel-molybdenum austenitic stainless steel. A particularly preferred stainless steel contains 16.0-18.0 wt% Cr, 10.0-14.0 wt% Ni, 2.00-3.00 wt% Mo, 0.08 wt% C, 2.00 wt% Mn, 0.045 wt% P, 0.03 wt% S, 0.75 wt% Si, 0.1 wt% N balance Fe; this steel is often referred to as type 316.

The powder mixture is heated at a temperature and duration suitable to achieve the desired conversion of iridium metal to oxidic species. It will be appreciated that the temperature and duration may differ depending on the choice of equipment used and the scale. The skilled person will be able to determine suitable conditions for a given equipment and scale.

### Dissolution - step (iii)

The mixture from step (ii) is typically left to cool to room temperature and is then dissolved or dispersed in water, preferably deionised water (DI). The solution turns deep blue immediately. It is preferred that the mixture is stirred to ensure full dissolution of soluble iridium species; stirring for 30 mins is normally sufficient. Dissolution is typically carried out at room temperature. It is preferred that the total iridium concentration before step (iv) commences is from 10-100 g_{Ir} / L, preferably 10-80 g_{Ir} / L, for example 10-60 g_{Ir} / L, 10-30 g_{Ir} / L or 15-25 g_{Ir} / L. The concentration of iridium is believed to be important in controlling the properties of the material formed in step (iv). For the avoidance of doubt, if 100 g iridium powder is used in step (ii) and 5L of DI is used in step (iii) then the iridium concentration is 20 g_{Ir} / L.

In an optional step carried out inbetween steps (iii) and (iv), the solution may be filtered to removed unreacted iridium particles.

### Acidification - step (iv)

The solution from step (iii) is acidified during which time a precipitate forms. Although the chemistry is not yet fully understood, pH control during the acidification step is thought to be important in preparing a catalyst with the correct properties. It is preferred that the pH is reduced gradually to within the range of pH 3.0 to 3.5. Precipitation can still be achieved when the pH is above 3.5, and even at alkaline pH, but the resulting product is more difficult to wash and impurities may therefore remain in the final product. In order to avoid chloride contamination in the product it is preferred that pH adjustment is carried out using an acid that is not HCI. Nitric acid is a preferred acid for pH adjustment. The precipitation produces a solid and a supernatant.

Once the pH has been reduced, the mixture may optionally be diluted by addition of water, preferably DI water. It is preferred that the mixture is diluted to achieve an iridium concentration which is 40-60% of the original concentration. For example, if the iridium concentration prior to step (iv) was 20 g_{Ir} / L then the mixture is diluted to achieve an iridium concentration of 8-12 g_{Ir} / L.

### Filtration - step (v)

Following acidification, and optional dilution, the solid and supernatant are separated, preferably by filtration. The solid is washed with water, preferably DI, to remove soluble impurities.

### Drying - step (vi)

The filtered solid is then dried. The solid should be dried at a temperature of approximately 55 °C if the hydrate is desired. To obtain a dehydrated product a higher temperature should be used, preferably around 150 °C, e.g. 120-180 °C, such as 130-170 °C. The duration of the drying step will depend on the apparatus used and the scale, but the skilled person will be able to determine suitable conditions.

The material formed after step (vi) may be described as amorphous or poorly crystalline. If a more crystalline material is desired then the process may include an optional step of calcining the material from step (vi) to increase its crystallinity.

### Grinding

In an optional step the dried material, which may optionally have first been calcined, is ground to the appropriate particle size. Any suitable grinding method may be used. The ground material is then sieved to the desired particle size fraction. The ground material is generally filtered using a series of sieves with the final sieve being US Mesh 200 (retaining sizes above 75 µm). Any oversized powder is returned to the grinding step.

### Incorporation into a catalyst-coated membrane

The process may include a subsequent step of incorporating the catalyst into a catalyst-coated membrane. A catalyst-coated membrane generally comprises a membrane having anode catalyst layer on a first face thereof and a cathode catalyst layer on a second face thereof.

The process may also include a subsequent step of incorporating the catalyst-coated membrane into a fuel cell or water electrolyser.

### Catalyst

The catalyst produced by the process has an oxygen content that is higher than is expected for pure IrO₂. It is thought that the catalyst includes at least some IrO(OH)₂, possibly in addition to IrO₂ and/or Ir₂O₃.

The catalyst has a S_{BET} surface area of 10-50 m²/g when measured according to the method described in the experimental section. It is preferred has the catalyst has a S_{BET} surface area of 10-40 m²/g, preferably 10-35 m²/g, preferably 10-30 m²/g, preferably 15-30 m²/g, 15-25 m²/g or 18-24 m²/g.

In some embodiments iridium metal may also be present, which can be identified by sharp peaks at 2θ = 41°, 47° and 83° in the XRD spectrum. Alternatively, the catalyst may be free from iridium metal, which can be identified by the absence of sharp peaks at 2θ = 41°, 47° and 83°. As noted above, the presence of iridium metal can be avoided by filtering the solution between steps (iii) and (iv) in order to remove unreacted iridium particles, and/or by controlling the oxidation conditions in step (ii) so as to oxidize all of the iridium powder.

The catalyst typically contains at least 70 wt% iridium when measured by inductively coupled plasma mass spectrometry (ICP-MS), preferably at least 75 wt% iridium, preferably 75-85 wt% iridium, more preferably 78-82 wt% iridium.

If an iridium powder having a suitably low impurity content is used in step (i) and appropriate materials are used to contain the mixture used in step (ii) then it is possible to produce an amorphous, low surface area OER catalyst with an especially low content of transition metal impurities. The catalyst according to the third aspect of the invention has a content of any individual transition metal, other than iridium, which is 0-600 ppm when measured by inductively coupled plasma mass spectrometry (ICP-MS) analysis, preferably 0-500 ppm, such as 0-400 ppm, 0-300 ppm or 0-200 ppm. For demanding applications and where a particularly long life is required, it is preferred that the content of any individual transition metal other than iridium is 0-100 ppm.

In preferred embodiments the catalyst has a content of any individual transition metal other than iridium which is 0-500 ppm, preferably 0-250 ppm. For the avoidance of doubt, the combined amount of transition metals, other than iridium, may be above 500 ppm. For demanding applications and where a particularly long life is required, it is preferred that the catalyst has a content of any individual transition metal other than iridium which is 0-100 ppm.

It is preferred that the catalyst has a largest particle size of ≤ 75 µm. This corresponds to catalyst which passes through a US Mesh 200. This particle size is typically suitable for incorporation in a layer of a fuel cell or water electrolyser.

### Examples

### BET surface area

The sample was placed in a 3/8" diameter small bulb tube. The amount of sample was chosen so as to fill at least 1/3^{rd} of the bulb. and to give a surface area of and degassed at room temperature for 10 minutes followed by treatment at 300 °C for 1 h under N₂ flow, then allowed to cool down gradually under N₂ flow to room temperature. N₂ BET surface area was measured using a Micromeritics^{™} TriStar II Plus instrument. The values of surface area calculated from this technique are m² per gram of catalyst.

### XRD

XRD analysis was carried out using a Bruker D8 Advance Davinci diffractometer with a Lynxeye-XE PSD detector with 0.0125° Ni Filter. The analysis was carried out an ambient temperature using Cu Kα (λ = 1.5406 + 1.54439 Å) radiation. Phase identification was carried out using Bruker AXS Diffrac EVA V5 (2010-2018) software and the PDF-4+ database (2020 release).

### Impurities content

The content of impurities was measured by inductively coupled plasma mass spectrometry (ICP-MS) using an Agilent 725 ICP-OES instrument.

### Example 1

Iridium powder (300 g, 400 mesh corresponding to particle sizes below 23 µm) was combined with 900 g of sodium peroxide and the mixture roughly ground until well mixed. The mixture was transferred to a nickel crucible and heated by means of a natural gas flame (temperature approximately 500 °C) with mixing using a nickel rod to avoid clumping. Once the mixture showed signs of visible red heat heating was stopped and the mixture was allowed to cool for 60-90 minutes. Once cooled the mixture was dissolved in 14 L DI water and allowed to stir for 30 mins to ensure complete dissolution. Reagent grade nitric acid was added until the pH reduced to ~3.25. Once the target pH was reached the mixture was diluted with 14L DI water, stirred then allowed to settle for 1 h. The solid was collected via a Buchner funnel equipped with vacuum pump and washed with 150 L DI water at 75 °C. The solid was collected and dried in trays in an oven at 150 °C for 10 h. The solid was ground and sieved through a series of sieves, the final sieve being US Mesh 200 (retaining sizes above 75 µm).

The XRD spectrum of the catalyst is shown in Figure 1. Peaks at 2θ = 40, 44, 59 indicated the presence of unreacted iridium metal. A broad peak around 2θ = 33° indicated the presence of amorphous IrO₂.

The catalyst had a S_{BET} of 22 m²/g. The residual iridium content was ~8%.

The catalyst had a Ni content of 654 ppm.

The values of % iridium dissolution, current density at 1.47 V / A / g_{Ir} (a measure of activity) and surface area for the catalyst of Example 1 and two commercial iridium oxide materials is reported in Table 1. The catalysts were tested under identical conditions.

**Table 1.**

| | Iridium dissolution (%) | Current density at 1.47 V / A / g_{Ir} | Surface area (m²/g) |
|---|---|---|---|
| Example 1 | 0.12 | 19 | 22 |
| Commercial material 1 | 0.27 | 22 | 103 |
| Commercial material 2 | 0.15 | 21 | 170 |

Despite the relatively low surface area of Example 1, the catalyst had an activity which was comparable to commercial materials of much higher surface area. In addition, the material had a lower iridium dissolution than the commercial materials.

### Example 2

Iridium powder (300 g) and sodium peroxide (900 g) were mixed in a pestle and mortar until the mix was visually homogeneous. It was then fed gradually to a continuous rotary calciner set to 450 °C. The inner surface of the rotary calciner was stainless steel. The rotation speed and incline were selected to achieved ~60% conversion of the iridium metal. The solid was allowed to cool, then was dissolved, acidified and precipitated following the conditions used in example 1.

The product had a S_{BET} of 15.7 m²/g. The residual iridium content was ~40%.

The highest levels of transition metal impurities were: Rh 87 ppm; Cr 86 ppm; Fe 61 ppm.

Example 2 demonstrates that by appropriate selection of the material used to contain the powder mixture in step (ii) it is possible to produce a product with very low transition metal contaminants.

## Claims

1. A process for preparing an iridium-based oxygen evolution reaction catalyst, comprising the steps of:
(i) combining iridium powder and a peroxide salt to produce a powder mixture;
(ii) carrying out thermal treatment on the powder mixture;
(iii) dissolving the product from (ii) in water to produce a solution;
(iv) reducing the pH of the solution from (iii) to affect a precipitation and form a solid and a supernatant;
(v) separating the solid from the supernatant; and
(vi) drying the solid.

2. A process according to claim 1, wherein the peroxide salt is sodium peroxide.

3. A process according to claim 1 or claim 2, wherein the iridium powder and peroxide salt are combined at a molar ratio of from 1 : 4 to 1 : 10.

4. A process according to any of claims 1 to 3, wherein the surface of any equipment which comes into contact with the powder mixture in step (ii) is a metal oxide or a stainless steel.

5. A process according to any of claims 1 to 4, wherein step (ii) is carried out:
in a static oven, static furnace, belt furnace or rotary calciner; or
in a belt oven; or
in a fluid bed calciner; or
using a hot plate with the powder mixture held within a suitable container on the hot plate; or
using a combustion flame with the powder mixture held within a suitable container.

6. A process according to any of claims 1 to 5, wherein the total iridium content in the solution formed in step (iv) is 10-30 g_{Ir} / L.

7. A process according to any of claims 1 to 6, wherein in step (iv) the pH is reduced using an acid that is not HCI.

8. A process according to any of claims 1 to 6, wherein in step (iv) the pH is reduced using nitric acid.

9. A process according to any of claims 1 to 8, comprising a further step of calcining the material from step (vi).

10. An iridium-based oxygen evolution reaction catalyst obtained or obtainable by a process according to any of claims 1 to 9.

11. An iridium-based oxygen evolution reaction catalyst, wherein:
the catalyst exhibits a single maxima in its XRD spectrum in the region 2θ = 25-38°;
the catalyst has a BET surface area of 10-50 m²/g when measured by the method reported in the Examples section;
the content of any individual transition metal, other than iridium, is 0-600 ppm when measured by inductively coupled plasma mass spectrometry (ICP-MS).

12. A catalyst according to claim 11, wherein the catalyst has a BET surface area of 10-40 m²/g.

13. A catalyst according to claim 11 or claim 12, wherein the catalyst is free from iridium metal.

14. A catalyst coated membrane comprising an oxygen evolution reaction catalyst according to any of claims 10 to 13.

15. A fuel cell or a water electrolyser comprising a catalyst coated membrane according to claim 14.

## Patentansprüche

1. Prozess zum Herstellen eines iridiumbasierten Sauerstoffentwicklungsreaktionskatalysators, umfassend die Schritte:
(i) Kombinieren von Iridiumpulver und einem Peroxidsalz, um eine Pulvermischung zu produzieren;
(ii) Durchführen einer Wärmebehandlung an der Pulvermischung;
(iii) Auflösen des Produkts aus (ii) in Wasser, um eine Lösung zu produzieren;
(iv) Reduzieren des pH-Werts der Lösung aus (iii), um eine Ausfällung zu bewirken und einen Feststoff und einen Überstand zu bilden;
(v) Trennen des Feststoffs von dem Überstand; und
(vi) Trocknen des Feststoffs.

2. Prozess nach Anspruch 1, wobei das Peroxidsalz Natriumperoxid ist.

3. Prozess nach Anspruch 1 oder 2, wobei das Iridiumpulver und Peroxidsalz in einem Molverhältnis von 1 : 4 bis 1 : 10 kombiniert werden.

4. Prozess nach einem der Ansprüche 1 bis 3, wobei die Oberfläche einer beliebigen Ausrüstung, die mit der Pulvermischung in Schritt (ii) in Kontakt kommt, ein Metalloxid oder ein rostfreier Stahl ist.

5. Prozess nach einem der Ansprüche 1 bis 4, wobei Schritt (ii) durchgeführt wird:
in einem statischen Ofen, statischen Brennofen, Bandbrennofen oder Drehkalzinierofen; oder
in einem Bandofen; oder
in einem Wirbelschichtkalzinierofen; oder
unter Verwendung einer Heizplatte, wobei die Pulvermischung innerhalb eines geeigneten Behälters auf der Heizplatte gehalten wird; oder unter Verwendung einer Verbrennungsflamme, wobei die Pulvermischung innerhalb eines geeigneten Behälters gehalten wird.

6. Prozess nach einem der Ansprüche 1 bis 5, wobei der Gesamtiridiumgehalt in der Lösung, die in Schritt (iv) gebildet wird, 10-30 g_{Ir} / L beträgt.

7. Prozess nach einem der Ansprüche 1 bis 6, wobei in Schritt (iv) der pH-Wert unter Verwendung einer Säure, die nicht HCI ist, reduziert wird.

8. Prozess nach einem der Ansprüche 1 bis 6, wobei in Schritt (iv) der pH-Wert unter Verwendung von Salpetersäure reduziert wird.

9. Prozess nach einem der Ansprüche 1 bis 8, umfassend einen weiteren Schritt eines Kalzinierens des Materials aus Schritt (vi).

10. Iridiumbasierter Sauerstoffentwicklungsreaktionskatalysator, der durch einen Prozess nach einem der Ansprüche 1 bis 9 erhalten wird oder erhältlich ist.

11. Iridiumbasierter Sauerstoffentwicklungsreaktionskatalysator, wobei:
der Katalysator ein einziges Maximum in seinem XRD-Spektrum in der Region 2Θ = 25-38° vorweist;
der Katalysator einen BET-Oberflächenbereich von 10-50 m²/g aufweist, wenn durch das Verfahren, das in dem Abschnitt Beispiele angegeben ist, gemessen wird;
der Gehalt jedes einzelnen Übergangsmetalls, außer Iridium, 0-600 ppm beträgt, wenn durch Massenspektrometrie mit induktiv gekoppeltem Plasma (ICP-MS) gemessen wird.

12. Katalysator nach Anspruch 11, wobei der Katalysator einen BET-Oberflächenbereich von 10-40 m²/g aufweist.

13. Katalysator nach Anspruch 11 oder 12, wobei der Katalysator frei von Iridiummetall ist.

14. Katalysatorbeschichtete Membran, umfassend einen Sauerstoffentwicklungsreaktionskatalysator nach einem der Ansprüche 10 bis 13.

15. Brennstoffzelle oder Wasserelektrolyseur, umfassend eine katalysatorbeschichtete Membran nach Anspruch 14.

## Revendications

1. Procédé de préparation d'un catalyseur de réaction de dégagement d'oxygène à base d'iridium, comprenant les étapes consistant à :
(i) combiner de la poudre d'iridium et un sel de peroxyde pour produire un mélange de poudres ;
(ii) réaliser un traitement thermique sur le mélange de poudres ;
(iii) dissoudre le produit obtenu au point (ii) dans de l'eau pour produire une solution ;
(iv) réduire le pH de la solution obtenue au point (iii) pour provoquer une précipitation et former un solide et un surnageant ;
(v) séparer le solide du surnageant ; et
(vi) sécher le solide.

2. Procédé selon la revendication 1, dans lequel le sel de peroxyde est du peroxyde de sodium.

3. Procédé selon la revendication 1 ou la revendication 2, dans lequel la poudre d'iridium et le sel de peroxyde sont combinés dans un rapport molaire de 1 :4 à 1 :10.

4. Procédé selon l'une quelconque des revendications 1 à 3, dans lequel la surface de tout équipement entrant en contact avec le mélange de poudres à l'étape (ii) est un oxyde métallique ou un acier inoxydable.

5. Procédé selon l'une quelconque des revendications 1 à 4, dans lequel l'étape (ii) est réalisée :
dans un four statique, four sur socle, four à bande ou calcinateur rotatif ; ou
dans un four à bande ; ou
dans un four à lit fluidisé ; ou
à l'aide d'une plaque chauffante, le mélange de poudres étant placé dans un récipient approprié sur la plaque chauffante ; ou
à l'aide d'une flamme de combustion, le mélange de poudres étant placé dans un récipient approprié.

6. Procédé selon l'une quelconque des revendications 1 à 5, dans lequel la teneur totale en iridium de la solution formée à l'étape (iv) est de 10 à 30 g_{Ir} / L.

7. Procédé selon l'une quelconque des revendications 1 à 6, dans lequel, à l'étape (iv), le pH est réduit à l'aide d'un acide qui n'est pas HCI.

8. Procédé selon l'une quelconque des revendications 1 à 6, dans lequel, à l'étape (iv), le pH est réduit à l'aide d'acide nitrique.

9. Procédé selon l'une quelconque des revendications 1 à 8, comprenant une étape supplémentaire de calcination de la matière de l'étape (vi).

10. Catalyseur de réaction de dégagement d'oxygène à base d'iridium obtenu ou pouvant être obtenu par un procédé selon l'une quelconque des revendications 1 à 9.

11. Catalyseur de réaction de dégagement d'oxygène à base d'iridium, dans lequel :
le catalyseur présente un seul maximum dans son spectre XRD dans la région 2θ = 25-38° ;
le catalyseur présente une surface BET de 10 à 50 m²/g lorsqu'elle est mesurée selon le procédé décrit dans la section « Exemples » ;
la teneur en tout métal de transition individuel, autre que l'iridium, est comprise entre 0 et 600 ppm lorsqu'elle est mesurée par spectrométrie de masse à plasma à couplage inductif (ICP-MS).

12. Catalyseur selon la revendication 11, dans lequel le catalyseur a une surface BET de 10 à 40 m²/g.

13. Catalyseur selon la revendication 11 ou la revendication 12, dans lequel le catalyseur est exempt d'iridium métallique.

14. Membrane revêtue de catalyseur comprenant un catalyseur de réaction de dégagement d'oxygène selon l'une quelconque des revendications 10 à 13.

15. Pile à combustible ou électrolyseur d'eau comprenant une membrane revêtue de catalyseur selon la revendication 14.
